# EUROPEAN PATENT SPECIFICATION

(11) **EP 1 309 851 B1**
(45) Date of publication and mention of the grant of the patent: **21.04.2010**
(21) Application number: 01955745.3
(22) Date of filing: 13.07.2001
(51) Int. Cl.: G01N 23/20

(54) **Screening crystallisation conditions of polymorphs**
Reihenuntersuchung zur Ermittlung der Kristallisationsbedingungen von Polymorphen
Criblage de conditions de cristallisation de polymorphes

(30) Priority: 13.07.2000 EP 00202500
(43) Date of publication of application: 14.05.2003
(60) Divisional application: 09174343.5
(73) Proprietor: Universiteit Leiden, 2300 RA Leiden (NL); Avantium International B.V., 1014 BV Amsterdam (NL)
(72) Inventor: KUIL, Maxim, Emile, NL-1064 WJ Amsterdam (NL); HOEDEMAEKER, Philippus, Jacobus, NL-1503 JL Amsterdam (NL); ABRAHAMS, Jan, Pieter, NL-2317 Leiden (NL); MAXWELL, Ian, Ernest, NL-2082 BH Santpoort-Zuid (NL); PLAISIER, Jasper, Rikkert, NL-2316 ZG Leiden (NL)
(74) Representative: de Lang, Robbert-Jan
(86) International application number: PCT/NL2001/000541
(87) International publication number: WO 2002/006802

(56) References cited:
- CHAYEN N E ET AL: "AN AUTOMATED SYSTEM FOR MICRO-BATCH PROTEIN CRYSTALLIZATION AND SCREENING" JOURNAL OF APPLIED CRYSTALLOGRAPHY, COPENHAGEN, DK, vol. 23, 1990, pages 297-302, XP000213540 ISSN: 0021-8898
- B. E. PADDEN: "Comparison of solid-state 13C NMR Spectroscopy and Power X-Ray Diffraction for Analyzing Mixtures of Polymorphs of Neotame." ANALYTICAL CHEMISTRY.A., 1999, pages 3325-3331, XP002175928 AMERICAN CHEMICAL SOCIETY. COLUMBUS., US
- SHIHAI KAN ET AL.: "Formation Process of Nanometer-Sized Cubic Ferric Oxide Single Crystals" JOURNAL OF COLLOID AND INTERFACE SCIENCE, vol. 178, no. 2, 1996, pages 673-680,
- MCCRONE, W.: "POLYMORPHISM" PHYSICS AND CHEMISTRY OF THE ORGANIC SOLID STATE, vol. 2, 1 January 1965 (1965-01-01), pages 725-767, XP001156955
- KHOSHKHOO, SOHRAB ET AL.: "Crystallization of polymorphs: the effect of solvent" JOURNAL OF PHYSICS D: APPLIED PHYSICS, vol. 26, no. 8B, 14 August 1993 (1993-08-14), pages B90-B93,
- SATO, K. ET AL.: "SOLVENT EFFECTS ON KINECTICS OF SOLUTION-MEDIATED TRANSITION OF STEARIC ACID POLYMORPHS" JOURNAL OF CRYSTAL GROWTH, vol. 72, 1 September 1985 (1985-09-01), pages 699-704,
- YU, LIAN ET AL.: "Physical characterization of polymorphic drugs: an integrated characterization strategy" PHARMACEUTICAL SCIENCE AND TECHNOLOGY TODAY, vol. 1, no. 3, 1 June 1998 (1998-06-01), pages 118-127, XP000949322

## Description

The present invention relates to methods for crystal forms (polymorphs) for analytes using e.g. a method and an apparatus for screening the phase behaviour, more in particular crystallisation behaviour in liquid, gel or solid phase of such analytes, such as organic molecules, for instance pharmaceutically interesting compounds and complexes, oligomers, salts, esters and solvates thereof, organometallic molecules such as catalysts for homogenous catalysis etc. The present invention also relates to the parallel detection of phase transitions, more specific crystallisation, of these analytes.

The present invention also provides methods for producing crystals of analytes on any desired scale using the conditions identified according to the invention. Further uses of the crystals and compositions comprising such crystals are also provided. Crystals of analytes according to the invention can also be used to collect information on the structure of analytes, more in particular in relation to the existence of crystal polymorphism. The invention provides for a method for the rapid determination of crystal polymorphism.

Crystallisation is in general considered as the separation or precipitation out of a liquid environment. The basic approach to crystallisation is usually fairly simple The molecule to be crystallised is dissolved or suspended and subsequently subjected to conditions that affect the solubility of the molecule in solution. This can be achieved by removal of the solvent or by the addition of other compounds that reduce the solubility, optionally in combination with variation of other factors such temperature, pressure or gravitational forces. When the conditions are right, small nuclei will form from which crystals will grow. However, the relations between the conditions and the crystallisation are generally not well understood. The optimisation of the crystallisation conditions is largely based on trial and error. To determine the optimal crystallisation conditions can therefor be a laborious and time-consuming process.

Many molecules can crystallise in different crystal forms, a phenomenon known as polymorphism. The appearance of these different crystalline forms is strongly dependent on the physical and chemical environment in which the crystal nucleates, grows or is exposed to after growth. Different crystalline forms result from different conditions under which the crystallisation is carried out. However, there is no significant theoretical framework that allows to predict reliably whether specific polymorphic forms of a molecule exist or can be expected and if so how these can be produced. The identification of polymorphic behaviour of molecules and determining the conditions under which the different polymorphic forms can be obtained therefor has to be done experimentally, a time-consuming and labour intensive process.

Once the material is in a crystalline form, valuable information can be obtained pertaining to the three-dimensional structure of the molecule. Furthermore valuable information can be obtained from different crystalline forms of molecules. For instance, different polymorphic forms may express different dissolution behaviour, or even express different properties in terms of biological activity.

Many pharmaceutically and/or industrially important molecules such as drug molecules or catalysts for homogenous catalysis are solids at room temperature. More often than not these molecules crystallise in distinct structural forms, thus exhibiting polymorphic behaviour. It is therefor of interest to obtain information on the crystallisation behaviour of such compounds.

The crystallisation behaviour of a compound is determined mostly by its stereochemistry. This obviously comprises its covalent bonding pattern, but also its ionic structure as determined by the presence of any available counter-ions in the crystal lattice. Next to this chemical makeup, other external parameters also affect the crystallisation of organic compounds such as concentration of the compound in the mother liquor, hydrophobicity/polarity of the solvents, temperature, speed of crystal-formation (nucleation), pressure and many others.

Due to this large number of parameters that affect crystallisation, determining the optimal combination of parameters results in an overwhelming amount of possible combinations. Conventional linear optimisation (testing one condition after the other) based on trial and error is hence a long and cumbersome method, if at all feasible. It is therefor an object of the present invention to provide methods in which testing of many combinations is possible and can be done efficiently and rapidly and preferably in parallel, i.e. testing various combinations of parameters at the same time.

Conventional linear optimisation as described above is also common practice in the search for polymorphs of small organic compounds. By serially screening many different conditions separately and evaluating the results, each in standard laboratory glassware the desired information can be collected, albeit at a very slow pace. Harvesting of the crystalline material (for instance in the form of powders) before characterisation is usually done manually, one at a time.

The present invention intends to provide for improvements in determining crystallisation conditions in general and in particular the determination of polymorphic behaviour. The invention further intends to overcome the above-mentioned disadvantages of the conventional techniques.

The present inventors have found a method for the screening of a large number of crystallisation conditions. Further they have devised a way for the screening of a large number of crystallisation conditions in parallel and for the identification of crystal polymorphs.

A method and an apparatus is disclosed for generating and analysing, preferably in parallel, multiple crystal forms (polymorphs) of chemical substance or mixtures of substances (the analyte) from which preferably at least one crystal form is known. To this end an array of solutions, or at least one solution, is provided, for instance in a range of solvents or solvent mixtures, or at least one solvent. The analyte may be provided in a specially designed substrate, but a conventional substrate such as a micro titerplate may suffice provided that some conditions are fulfilled which are exemplified in the various embodiments. Conditions under which the analytes are kept in the substrate are changed, for instance by altering or modifying physical or chemical conditions such as lowering the temperature or allowing solvent to evaporate. The crystallisation of the analytes may be induced by a change in these physical or chemical conditions. The insoluble material is analysed, by X-ray diffraction techniques in transmission geometry. The analysis of the insoluble material is performed in situ on the substrate. The X-ray diffraction patterns are, preferably automatically, corrected and compared. The patterns of different analytes are compared, thereby allowing the identification of different polymorphs and the conditions under which these polymorphs form or are converted from one polymorphic form into anther.

The invention in one aspect relates to a method according to claim 1.

Analyte within the terms of the present invention is a compound of which the crystallisation behaviour is to be determined. An analyte in terms of the invention is a chemical substance or a mixture of different substances of which substance at least one crystal form is known or of which it is expected that at least one crystal form exists. An analyte in terms of the invention is preferably an organic or organometallic molecule or compound, such as a pharmaceutically active molecules or catalyst-ligand complex or a dimer, salt, ester or solvate thereof. In another aspect an analyte in terms of the present invention can also be a biomolecule i.e. nucleic acids, DNA's, RNA's, PNA's, polypeptides, peptides, glycoproteins and other proteinaceous substances, lipoproteins protein-nucleic acid complexes, carbohydrates, biomimetics, etc.

One preferred way of warking the method of the present invention comprises providing a substrate comprising an array of optionally sealable containers, which containers are optionally provided with means to induce crystallisation, such as substances that alter or influence crystallisation behaviour such as nucleation agents, depositing separate volumes of analytes in the form of solids, slurries, emulsions or solutions and whereby the composition of each container differs in at least one aspect from the composition of at least one other container, optionally sealing off the containers from the atmosphere, optionally providing the containers with an atmosphere that influences the crystallisation behaviour, allowing crystalline material to form, manipulating the obtained crystalline material diffraction, for instance by removal of the solvents or providing the crystalline material on a carrier material to allow for analysis of the crystalline structure, preferably by X-ray diffraction techniques, preferably automatically determining the X-ray diffraction patterns of optionally selected analytes or compositions, optionally comparing the diffraction patterns of the analytes or compositions, optionally correcting the diffraction patterns for background fluctuations, optionally identifying polymorphs of the analyte and optionally relating the occurrence and the crystal form of the polymorphs to the composition and condition to which the analyte has been subjected.

The substrate is preferably chemically inert to the substances and solvents employed and is preferably transparent to the detection technique used, i.e. it is X-ray transparent for the X-ray diffraction technique. The substrate is preferably also transparent to visual light (ca 200 nm to 1000 nm) to allow visual or optical inspection. The substrate is preferably also capable of transferring heat, thereby allowing for temperature variations. Examples of arrays are 8 by 12 up to 32 by 48, with orthogonal centre to centre distance varying from 2 to 10 mm between the containers or wells of the substrate.

The determination of the polymorphic forms of the analyte is achieved by X-ray diffraction technology. Different polymorphs of an analyte produce different diffraction patterns. By determining the diffraction patterns in transmission geometry from the crystallised analytes and comparing these diffraction patterns, information is obtained relating the different crystallisation conditions to different crystalline forms of the analyte.

The determination of the X-ray diffraction characteristics of the crystallised analytes can conveniently be carried out in the provided array in which the crystallisation method has been carried out (*in-situ*). In transmission diffraction geometry, the preferred implementation, this requires that the array itself is transparent to X-ray diffraction or that the background diffraction pattern from the array is determined and the obtained X-ray diffraction data from the crystal in the array are corrected for this background pattern. The advantage of using a transmission geometry over more conventional reflection geometry of the diffraction experiments, is that substantially more signal is measured per mass unit of analyte. It is thus possible to use milligram, preferably nanogram or picogram amounts of material and still achieve an improved throughput.

The determination of the existence of different polymorphs of an analyte can be used to determine and/or optimising the conditions for the conversion of one crystal form of the analyte into another form of the analyte. An advantageous aspect of the present invention pertains to a method for optimising the conditions of the transformation of one polymorphic form of an analyte into another polymorphic form by subjecting the one polymorphic form of the analyte to the method for detecting polymorphism of the present invention.

According to the invention, preferably a plurality of different conditions is provided, each differing in at least one parameter which influences the crystallisation behaviour of the analyte to be crystallised. In an embodiment of the invention, the different conditions can be chemical or physical. A chemical condition in general comprises different (concentrations of) solvents, buffers, precipitants, salts etc. A physical condition is seen in terms of temperature, pressure etc.

Although the art generally teaches that large quantities of material are required for successful crystallisation we have shown that sub-microgram quantities can be used for small molecules (molecular weight in the order of less than 500 grams per mole) and even down to 1 nanogram quantities for proteins (molecular weight in the order of more than 5000 grams per mole). Because of the small volumes that can be used in the methods according to the invention, availability of analytes is less of a problem and rapid testing of numerous conditions and easy adjustment of relevant conditions is easily obtained. The method is thus advantageous when only minute quantities of the analyte are available, for instance in an early stage of the research.

Major advantages of the method according to the invention are that automated set-up of the experiments is generally quicker for small volumes, the automated detection of crystals in an array of conditions is quicker as more samples can be tested simultaneously, less material is required thereby reducing wastage, more tests can be performed given the amount of material available, the chance that the conditions under which crystallisation is achieved are identified significantly increases and the chances of identification of different polymorphic forms increases likewise.

A preferred way of providing a set of compositions for determining crystallisation conditions for analytes is a method wherein said set of compositions is provided on a solid support medium comprising of a multitude of separate cells, each comprising one composition. In this manner an array-like test format is provided allowing for easy automation of dispensing compositions and/or changing conditions per composition and of detection of phase change behaviour (typically crystallisation of the analyte). In any format the crystallisation may be best achieved by a further change to the conditions by allowing changes in any of the parameters through diffusion, evaporation, temperature change or other techniques or processes and combinations thereof. Such further changes in physical or chemical conditions can be applied in the present invention and very conveniently so in the array format. Further changes may also be used to fine tune the crystallisation conditions. The cells on the solid support are preferably further equipped with means for controlling the atmosphere in or directly above the cells. To this end the support medium is for instance fitted with sealing devices or sealing substances which seal off the entire support or seal off individual cells or groups of cells. To this end balls, plates, caps, inert liquids like paraffin oil, silicon oil, etc. can be provided.

The analyte is brought in the cells of the solid support by techniques that allow for the precise and controlled delivery of minute amounts of matter. Suitable techniques are those that allow for the precise and controlled delivery of amounts of liquids or solids in the range of microliters or - grams, preferably nanoliters or - grams, more preferable picoliters or - grams. When the analyte is provided in any liquid form, preferably dispensing techniques such as piezo-electric dispensing techniques, bubble-jet dispensing techniques, electro-spray dispensing techniques, as well as other micro- and submicro-dispensing techniques can be used, preferably nano-dispensing techniques are used. By using these techniques for dispensing it is possible to provide each cell with a predetermined amount of analyte. Hence, it is likewise possible to provide to each cell a different amount of analyte.

Also non-directional dispensing of a fluid onto the substrate, for instance by flood-filling by submerging the substrate into a fluid, pouring the fluid over the substrate, or other flood-filling techniques can be employed advantageously.

When the analyte is provided by means of some carrier, for instance in the form of a solution or emulsion, it is a preferred option to remove at least partly solvents and/or other carrier fluids by allowing or causing a degree of evaporation, drying, draining, lyophilisation or other fluid removal technique from the cells.

It is often desired to be able to influence the speed and duration of crystallisation processes, as well as the size and size distribution and homogeneity and/or purity of resulting crystals. In order to do so the invention is particularly suitable. A fast formation of nuclei can be designed, followed by slow crystallisation on those nuclei, if desired. Conditions on how to influence speed and growth and how to end crystallisation can all be determined. After that a production scale of crystals, for instance for pharmaceutical use (in pharmaceutical preparations) can be based on the conditions identified according to the invention. During crystal growth, gravity-induced convection that is caused by local concentration gradients that result from the accretion of molecules on the growing crystal, can adversely affect the crystalline order of said crystal. In small volumes, this gravity-induced convection is far less severe, since next to the diffusion rate and the speed of crystal growth, said convection increases with the physical size of the container in which crystallisation takes place. Therefore the present method will generally result in crystals that are better ordered than crystals grown in larger volumes, that are subjected to gravity.

As the method reduces gravity induced convection during crystal growth, the crystalline order of crystals produced with the method will approach that of high quality crystals grown in space, i.e. in microgravity conditions.

The invention provides for the determination of crystallisation conditions that allow for the growth of different crystal forms of the analyte, thus enabling the identification of polymorphic forms from the analyte. This is valuable information, for instance in the case of a pharmaceutical whereby polymorphs of the pharmaceutical compound of interest can each have different physical properties or different properties in terms of biological activity. Official approval such as from the United States' Food and Drug Administration of a specific and well-defined drug cannot be transferred to another polymorph of the same drug, although the chemical nature of the constituting molecules is identical. It is therefore very important that the various polymorphs of a drug are discovered and identified in order to gain an understanding of their biological properties. Furthermore, the early discovery of these drug polymorphs is also pharmaceutically interesting as the different polymorphs may have a different biological activity, for instance through differences in solubility.

A preferred use of the crystals produced according to the invention is in the determination of structures of analytes. Thus the invention further provides a method for determining the structure of an analyte comprising subjecting crystals from said composition according to the invention to solid state NMR techniques, neutron diffraction, electron diffraction and/or X-ray diffraction and determining its crystal structure.

Preferably, the method is carried out in an array of separate cells, whereby each cell contains a different composition. When a change in phase behaviour occurs, this is detected and can be correlated to the specific composition and conditions under which the screening is taking place. To provide for an increased reliability of the method, each combination may be provided in duplo or triplo on the same solid support medium.

Any crystal that does not have a cubic symmetry is known to change the polarisation of linearly polarised light, depending on its orientation with respect to the direction of polarisation of the through-falling light. This property of crystals and crystalline biomaterial in particular, is at present being used to determine and inspect the quality of individual crystals. However, this property can also be used to determine the presence or absence of a crystal of an analyte that is non-cubic. By measuring the change in the polarisation of the light falling through, as the direction of polarisation is changed, the presence of non-cubic crystalline material can be determined. Preferably the change in phase behaviour of the analyte is caused by the formation of crystalline material. This allows for the introduction of a separate step in the method for the detection of polymorphic behaviour. By first determining the presence of crystalline material, the number of X-ray diffraction patterns that have to be recorded may be reduced. This allows for a further increase in the efficiency of the method according to the invention.

Changes in phase behaviour can be determined in various ways, but for the rapid screening of multiple samples under reproducible circumstances preferred techniques are based on the detection or measurement of, continuously or intermittently, optical and/or diffraction characteristics of the individual cells.

The determination of the optical and/or diffraction characteristics of the individual cells can be done with a system comprising:
- a light source the direction of polarisation of which can be varied
- a holder for
- a substrate comprising a multitude of cells
- a system for detecting a change in the polarisation of the light coming from the polarisable light source.
- a position sensitive detector.

A change in the polarisation of the light generally corresponds to a change in phase behaviour. It is preferred that the change in phase behaviour is mainly due to a phase change of the analyte. A change in phase behaviour that is not caused by a phase change of the analyte may additionally provide useful and valuable information regarding the phase behaviour of the analyte itself. For example, if any salt crystallises, whilst the substance of interest remains soluble, the substance of interest cannot be precipitated at its present concentration with said salt.

Detecting phase changes can also be done by visual screening, for instance with the aid of microscopy techniques. The existence of polymorphs can then be determined by the previously described technique.

The invention further provides as a specific embodiment a method for screening the crystallisation behaviour of at least one analyte comprising the steps of:
- providing a solid support medium comprising of a multitude of separate cells,
- combining the analyte in each separate cell with one or more other components preferably such that the total composition of an individual cell differs in at least one aspect from the composition of at least one other cell, where the mixing of components and analytes is either simultaneously or in sequence, in any order;
- optionally modifying the conditions that lead to changes in phase behaviour in individual compositions;
- detecting changes in phase behaviour, more in particular crystallisation, of the compositions in the separate cells.

Additionally to speed up the identification of ideal conditions, the different cells can be compared (automatically) to each other.

Of course the change in phase behaviour of the composition is preferably mainly caused by a phase change, more in particular by crystallisation, of the analyte.

To enhance crystallisation of the analyte an inert nucleus or inert nuclei for crystallisation may be provided. In one embodiment the invention thus provides a method wherein the surface of the support medium comprises at least one crystallisation nucleus comprising an inert crystal, preferably those wherein the nucleation centres are in the form of small crystallites preferably of salts or complexes of the analyte. In another embodiment the (crystalline) nature of the substrate itself may influence crystallisation of the analyte.

The crystallisation initiation may further be influenced by a step in which nucleation is induced by agitation, vibration, micro-wave treatment, (ultra)sonic treatments or a combination thereof.

### Description of the figures

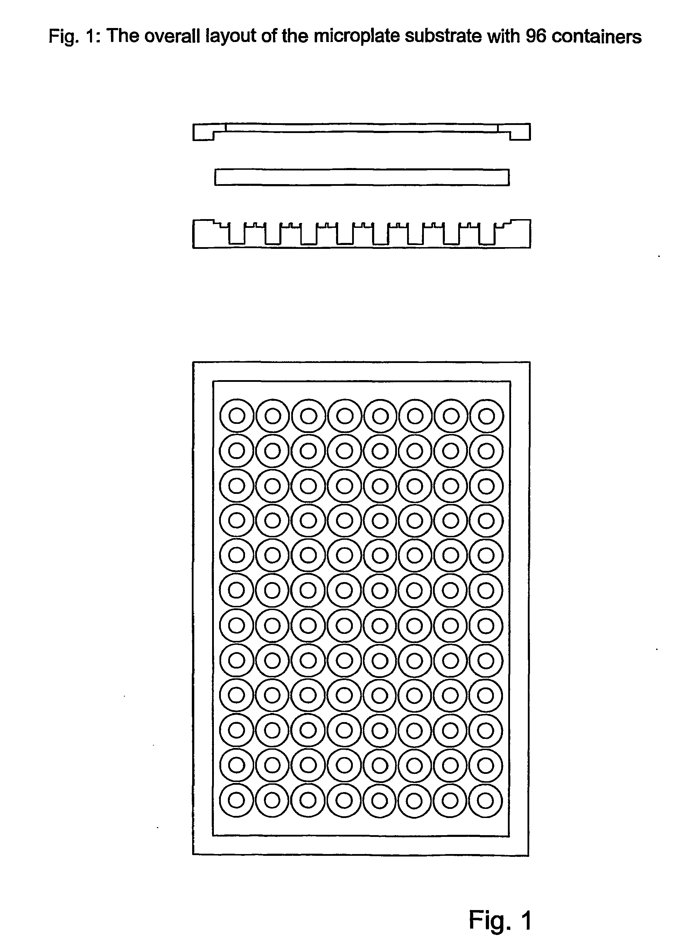

Figure 1: The overall layout of the microplate substrate with 96 containers.

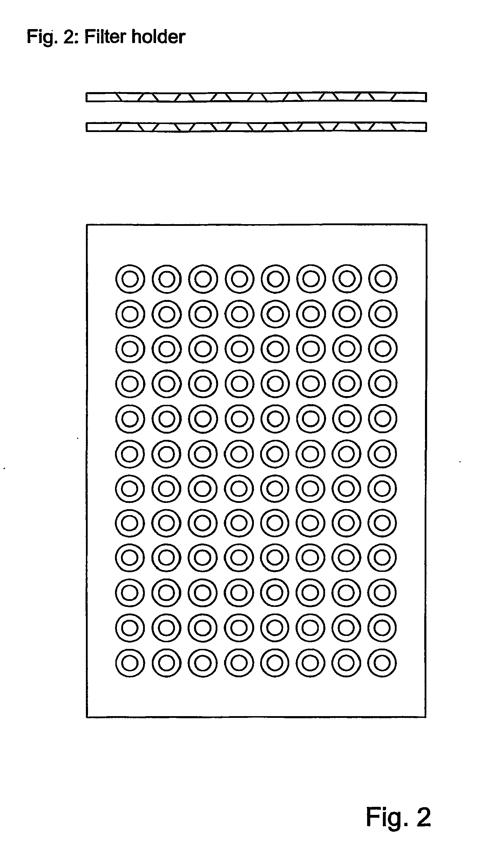

Figure 2: Filter holder.

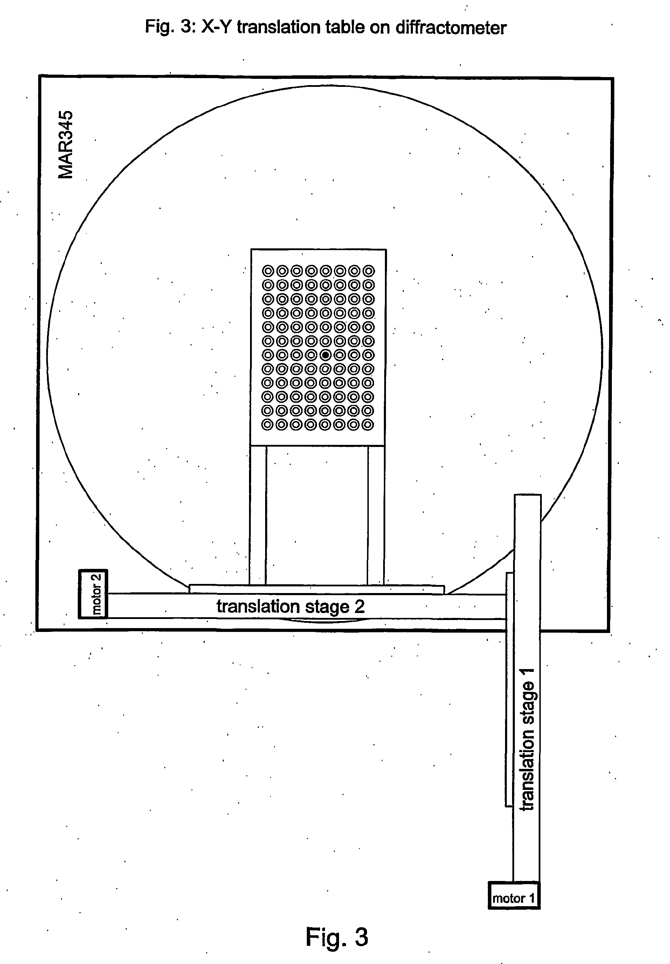

Figure 3: X-Y translation table on diffractometer.
Figure 4: X-ray diffraction patterns of different polymorphs recorded in the microarray.
Figure 5: X-ray powder diffraction patterns of polymorphs A, B and C of F₅O₃NC₁₈H₂.
Figure 6: Pathways used to produce polymorphs B and C in bulk from
polymorph A of F₅O₃NC₁₈H₂.

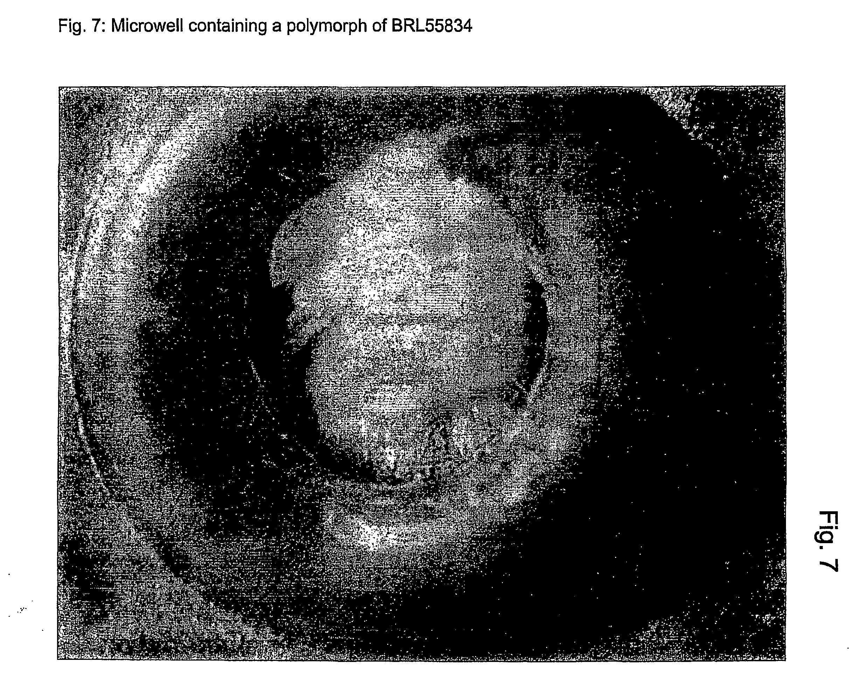

Figure 7: Microwell containing a polymorph of F₅O₃NC₁₈H₂.

### Examples

A microbatch array designed to process organic and inorganic liquids at elevated temperature and pressure was used. Materials were chosen to be as chemically inert as possible, to allow for a rapid heat transfer to and from the liquid compartments. A microplate array with outer dimensions of 127.7 mm by 85.5 mm, containing 96 wells was machined from brass, and was after machining gold plated. The volume of the microwells is approximately 50 µL and the individual wells are sealed with an O-ring made of a synthetic flexible polymer. For this purpose Viton® rings were used, but chemically more inert rings like Kalrez® or Teflon® rings might be preferable. The wells were closed by covering the O-rings by a 4 mm thick glass plate (length 117 mm, width 75 mm). To immobilise the glass plate on the microplate, a brass bracket is mounted with 16 small screws. The format of the microplate array is based on the standard size of a 96 well microtitre plate. The brass microplate is bolted to a stainless steel adapter board that fits snugly into the heating element of a commercially available 96-well thermocycler. (Viton and Kalrez are registered trademarks of DuPont Dow Elastomers, Teflon is a registered tradename of DuPont Company.)

The wells or containers of the substrate are filled with any manual, semiautomatic or automatic pipetting or dispensing device. The analyte is introduced in solution, upon which the solvent can be evaporated. It may be important to thoroughly filter the solution of said analyte before introducing it in said containers. Subsequently other components or solvents can be introduced by pipetting. If some or all of the analyte present in a container does not dissolve in its liquid environment, the temperature may be raised, optionally after said container has been sealed, to a temperature that is sufficiently high to achieve total dissolution.

A means of changing the conditions in the array of containers, resulting in crystallisation of the analyte is optionally provided. By changing the temperature, by allowing solvent to evaporate, or by a combination of these two processes, crystallisation is induced in parallel in one or more of the containers of said substrate. A means of analysis of the crystallinity and identification of polymorphs in each of the solid fractions in the array of containers is provided.

Optionally, the solid material from each of the individual containers can be transferred simultaneously to a thin carrier membrane using one of a variety of different ways. For example, Whatman Polyfiltronics has developed a system for harvesting on a single filter, precipitated chemicals from a 96-well plate by filtration, using a special suction system. A means of automated analysis and identification of physical properties of polymorphs on an array of containers is provided.

The optional filter is mounted on an X-Z translation system, like the one manufactured by (Altechna Co. Ltd., Vilnius, Latvia) that is placed on an X-ray diffractometer, like an FRG-391 generator from Nonius (Delft, The Netherlands). (Transmission powder) X-ray diffraction patterns can be recorded on an area detector, like the MAR-345 image plate detector of MAR Research GmbH (Hamburg, Germany). X-ray diffraction patterns are recorded of each of the retentates that are held on the filter. After the exposure of one retentate has finished, the X-Z translation table moves the next retentate into the exposure position. The X-ray diffraction images are analysed and compared. Fluctuating backgrounds, due to e.g. non-uniformity of the filter, can be removed from the diffraction images before mutually comparing the observed patterns.

An example of the application of the described technology is given below:

### Results on F₅O₃NC₁₈H₂ in microarray

A single chemical compound (F₅O₃NC₁₈H₂, molecular weight: 393.36) was tested for crystallising conditions and polymorphism, using a simple heating-cooling cycle on a screen consisting of 16 different solvent compositions. The diffraction patterns of different polymorphs were identified automatically using a cross-correlation method. The full screen consisted of 6 identical subsets. The identified polymorphs are indicated in table I.

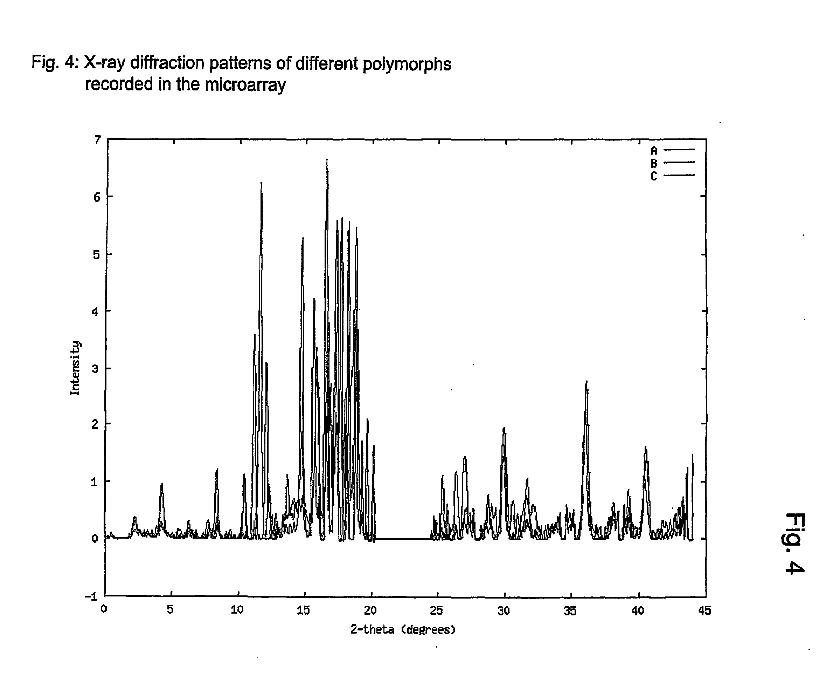

In some of the containers no polymorph could be identified. This may be due to the absence of crystallinity and/or the very low amount of crystalline material present. Out of 73 compounds classified, according to their X-ray diffraction, only two wells contained material that was not a polymorph of the original material (polymorph A). The X-ray diffraction patterns of the three polymorphs are given in figure 4. In conclusion, it is possible to produce and detect polymorphs in small volumes. Relating the processing condition to the formation of the desired polymorph is possible. Further information was obtained from additional screens exploring the phase diagram in more detail to find optimised processing conditions.

### Results on F₅O₃NC₁₈H₂ in bulk

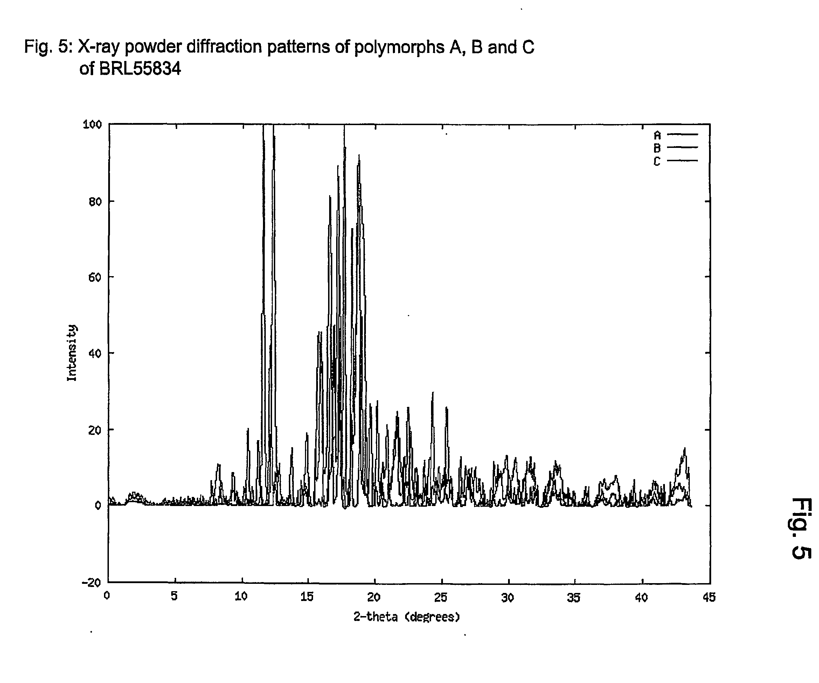

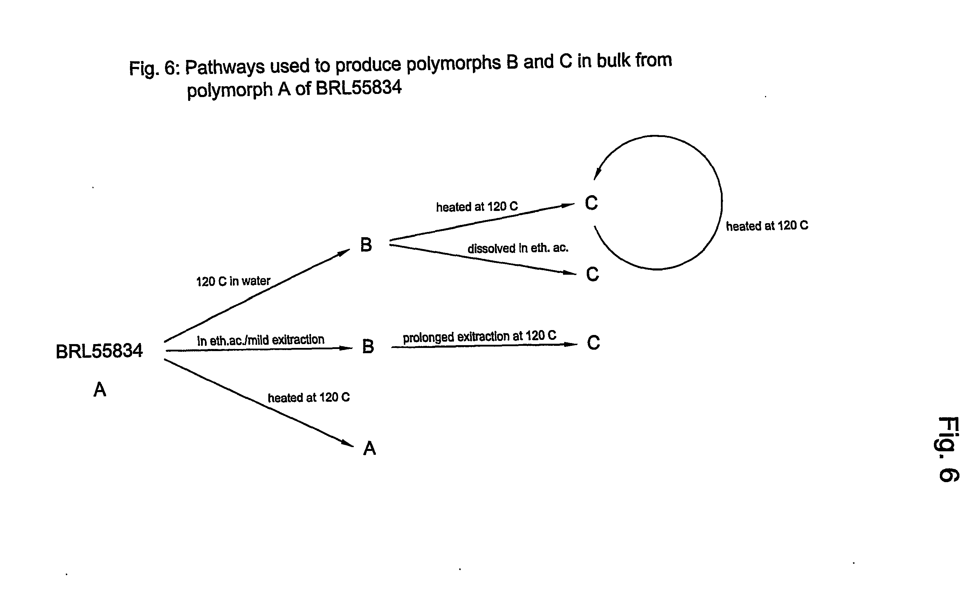

Two polymorphs B and C were produced from the original material, polymorph A, using a variety of pathways. The formation of polymorph B was found after dissolving polymorph A in water at elevated temperature 120° C and pressure. This seems to be an intermediate structure and several pathways could be used to obtain the polymorph C in bulk. The X-ray diffraction patterns of the three polymorphs are given in figure 5. In conclusion, both B and C can be produced in bulk using different pathways as shown in figure 6. The mass of polymorphs A and C was determined by ESI mass spectrometry and both masses were in agreement with the chemical composition as documented. It can be ruled out that polymorph B or C is a degradation product, since C can be produced from pure A via intermediate B.

**Table I: Identification of polymorphs on the micro-array**

| | ***1*** | ***2*** | ***3*** | ***4*** | ***5*** | ***6*** | ***7*** | ***8*** | ***9*** | ***10*** | ***11*** | ***12*** |
|---|---|---|---|---|---|---|---|---|---|---|---|---|
| ***I*** | C | B | B | C | - | B | B | B | A | B | C | C |
| ***II*** | - | C | C | - | B | - | C | C | B | C | C | C |
| ***III*** | B | C | C | C | - | C | C | C | B | C | C | C |
| ***IV*** | B | - | C | C | - | C | - | C | B | - | C | C |
| ***V*** | C | B | - | C | C | A | B | B | B | C | C | B |
| ***VI*** | B | - | C | - | B | - | - | - | B | C | C | - |
| ***VII*** | - | C | - | B | C | C | C | C | C | C | C | C |
| ***VIII*** | B | C | C | - | B | - | C | C | B | - | - | - |

| | | | | | | | | | | | | |
|---|---|---|---|---|---|---|---|---|---|---|---|---|
| Note: in the tables ***italic*** numeral symbols are used to indicate the position in the plate. In this table the non-italic symbols A, B and C indicate the polymorph identification. | | | | | | | | | | | | |

**Table II: Solvent composition of each microwell**

| One gram of F₅O₃NC₁₈H₂ was dissolved in 4.5 gram ethylacetate p. a. and 20 µ L was added in two portions of 10 µL into each of the 96 wells in the micro batch plate. The solvent was allowed to evaporate by heating to 40° C in a conventional PCR machine with an open lid for one hour. The following 96 well screen was set up with 4 solvent components: water (H₂O), methanol (MeOH), 1-butanol (BuOH) and 2-propanol (i-PrOH). | | | | |
|---|---|---|---|---|
| index | ***1*** | ***2*** | ***3*** | ***4*** |
| ***A*** | 15 µL H₂O | 5 µL MeOH | 10 µL H₂O | 10 µL H₂O |
| | | 10 µL H₂O | 5 µL BuOH | 5 µL i-PrOH. |
| ***B*** | 5 µL H₂O | 15 µL MeOH | 10 µL MeOH | 10 µL MeOH |
| | 10 µL MeOH | | 5 µL BuOH | 5 µL i-PrOH. |
| ***C*** | 5 µL H₂O | 5 µL MeOH | 15 µL BuOH | 10 µL BuOH |
| | 10 µL BuOH | 10 µL BuOH | | 5 µL i-PrOH. |
| ***D*** | 5 µL H₂O | 5 µL MeOH | 5 µL BuOH | 15 µL i-PrOH. |
| | 10 µL i-PrOH. | 10 µL i-PrOH. | 10 µL i-PrOH. | |

**+Table III**

| Index | ***1*** | ***2*** | ***3*** | ***4*** | ***5*** | ***6*** | ***7*** | ***8*** | ***9*** | ***10*** | ***11*** | ***12*** |
|---|---|---|---|---|---|---|---|---|---|---|---|---|
| ***I*** | | | | | A1 | A2 | A3 | A4 | A1 | A2 | A3 | A4 |
| ***II*** | | | | | B1 | B2 | B3 | B4 | B1 | B2 | B3 | B4 |
| ***III*** | | | | | C1 | C2 | C3 | C4 | C1 | C2 | C3 | C4 |
| ***IV*** | | | | | D1 | D2 | D3 | D4 | D1 | D2 | D3 | D4 |
| ***V*** | A1 | A2 | A3 | A4 | A1 | A2 | A3 | A4 | A1 | A2 | A3 | A4 |
| ***VI*** | B1 | B2 | B3 | B4 | B1 | B2 | B3 | B4 | B1 | B2 | B3 | B4 |
| ***VII*** | C1 | C2 | C3 | C4 | C1 | C2 | C3 | C4 | C1 | C2 | C3 | C4 |
| ***VIII*** | D1 | D2 | D3 | D4 | D1 | D2 | D3 | D4 | D1 | D2 | D3 | D4 |

The composition of the 16 solvent screen was repeated six times on the 96 well array.

## Claims

1. A method for detecting polymorphism of at least one analyte, comprising the provision of a set of compositions on a solid support medium, the solid support medium comprising a multitude of separate cells, each said composition comprising at least one analyte, and inducing or allowing each composition to adopt at least a first condition possibly influencing crystallisation of the compositions in the cells on the solid support medium, and detecting any crystallisation in at least one composition, determining the X-ray diffraction patterns in transmission diffraction geometry in the cells wherein the crystallisation has been carried out, comparing the X-ray diffraction patterns and thereby identifying any polymorphs of the analyte.

2. A method according to claim 1, wherein the provided set of compositions contains the at least one analyte in one polymorphic form and wherein, by comparing the X-ray diffraction patterns and identifying any other polymorphs of the analyte, the conditions of the transformation of one polymorphic form of an analyte into another polymorphic form are determined and/or optimised.

3. A method according to claim 1, wherein each member of said set of compositions differs in at least one condition from any other composition of said set.

4. A method according to claim 3, wherein said at least one condition comprises a physical condition.

5. A method according to claim 3, wherein said at least one condition comprises a chemical condition.

6. A method according to claim 3, further comprising changing at least one further condition after exposing the composition to said first condition.

7. A method according to claim 3, further comprising identifying conditions under which desired size and homogeneity of analytes are obtained.

8. A method according to any one of the foregoing claims wherein said analyte is a small organic molecule, an organometallic compound, a catalyst, a salt of an organic molecule or pharmaceutically active compound or a biomolecule.

9. A method to any of the previous claims, wherein the composition has a volume of less than 1000, preferably less than 100, more preferably less than 10 microliter.

10. A method according to claim 1, wherein the total composition of an individual cell differs in at least one aspect from the composition of at least one other cell and wherein changes in polymorphic behaviour of the compositions in the separate cells are detected by determining the crystal form of the analyte.

11. A method according to claim 10, additionally comprising a step wherein the composition of the cell is further modified.

12. A method according to any one of claims 1-11, wherein the analyte is provided in the form of a crystalline or aggregated state, solution, emulsion or a suspension.

13. A method according to claim 10-12, wherein the surface of the support medium comprises at least one crystallisation nucleus comprising an inert crystal.

14. A method according to claims 1-13, wherein the cells have a volume or are filled to a total volume of at most at most 1000, preferably at most 100, more preferably at most 10 microliter.

15. A method according to claims 1-13, wherein the cells contain at most 100, preferably at most 10, more preferably at most 1 microgram of the analyte.

16. A method according to claims 10-15, wherein the change in crystallisation behaviour of the analyte comprises the formation of crystalline material of the analyte.

17. A method according to claim 16, wherein the formation of crystalline material of the analyte comprises the formation of at least one polymorphic form of the crystalline material.

18. A method according to claim 16 or 17, wherein the crystalline material of the analyte comprises co-crystals of two or more analytes or of an analyte with a small molecule, like a salt or a solvate.

19. A method according to any one of claims 1-18, additionally comprising a step in which nucleation is induced by addition of nucleation centres, by agitation, vibration, micro-wave treatment, (ultra) sonic treatments or a combination thereof.

20. A method according to claim 19, wherein the nucleation centres are in the form of small crystallites.

21. A method according to claim 20, wherein the small crystallites are salts or complexes of the analyte.

22. A method according to any one of claims 1-22, wherein the analyte and/or components are added to the cells by piezo-electric dispensing techniques, bubble jet dispensing techniques, electrospray dispensing techniques, micro-and nano-dispensing techniques, or flood filling or combinations thereof.

## Patentansprüche

1. Ein Verfahren zur Ermittlung von Polymorphie mindestens eines Analyten, umfassend die Bereitstellung einer Reihe von Zusammensetzungen auf einem festen Trägermedium, wobei das feste Trägermedium eine Vielzahl an getrennten Zellen aufweist, wobei jede Zusammensetzung mindestens einen Analyten umfasst, und Induzieren oder Ermöglichen jeder Zusammensetzung, mindestens eine erste Bedingung anzunehmen, die möglicherweise die Kristallisation der Zusammensetzungen in den Zellen auf dem festen Trägermedium beeinflusst, und Ermittlung jedweder Kristallisation in mindestens einer Zusammensetzung, Bestimmen der Röntgenbeugungsmuster in Transmissions-Beugungsgeometrie in den Zellen, in denen die Kristallisation durchgeführt worden ist, Vergleichen der Röntgenbeugungsmuster und Identifizieren **dadurch** jeglicher Polymorphe des Analyten.

2. Ein Verfahren gemäß Anspruch 1, wobei die bereitgestellte Reihe von Zusammensetzungen den mindestens einen Analyten in einer polymorphen Form enthält und wobei, durch Vergleichen der Röntgenbeugungsmuster und Identifizieren jeglicher anderer Polymorphe des Analyten, die Bedingungen der Umwandlung von einer polymorphen Form des Analyten in eine andere polymorphe Form bestimmt und/oder optimiert werden.

3. Ein Verfahren gemäß Anspruch 1, wobei sich jedes Mitglied der Reihe von Zusammensetzungen durch mindestens eine Bedingung von jeder anderen Zusammensetzung der Reihe unterscheidet.

4. Das Verfahren gemäß Anspruch 3, wobei die mindestens eine Bedingung eine physikalische Bedingung umfasst.

5. Das Verfahren gemäß Anspruch 3, wobei die mindestens eine Bedingung eine chemische Bedingung umfasst.

6. Ein Verfahren gemäß Anspruch 3, ferner umfassend das Verändern mindestens einer weiteren Bedingung nach dem Aussetzen der Zusammensetzung der ersten Bedingung.

7. Ein Verfahren gemäß Anspruch 3, ferner umfassend das Identifizieren von Bedingungen, unter welchen eine gewünschte Größe und Homogenität der Analyten erhalten werden.

8. Ein Verfahren gemäß einem der vorstehenden Ansprüche, wobei der Analyt ein kleines organisches Molekül, eine organometallische Verbindung, ein Katalysator, ein Salz eines organischen Moleküls oder einer pharmazeutisch aktiven Verbindung oder ein Biomolekül ist.

9. Ein Verfahren gemäß einem der vorstehenden Ansprüche, wobei die Zusammensetzung ein Volumen von weniger als 1000, bevorzugt weniger als 100 und stärker bevorzugt weniger als 10 Mikroliter aufweist.

10. Ein Verfahren gemäß Anspruch 1, wobei sich die Gesamtzusammensetzung einer einzelnen Zelle in mindestens einem Aspekt von der Zusammensetzung der mindestens einen anderen Zelle unterscheidet und wobei die Veränderungen im polymorphen Verhalten der Zusammensetzungen in den getrennten Zellen durch Bestimmung der kristallinen Form des Analyten ermittelt werden.

11. Ein Verfahren gemäß Anspruch 10, das zusätzlich einen Schritt, in welchem die Zusammensetzung der Zelle weiter verändert wird, umfasst.

12. Ein Verfahren gemäß einem der Ansprüche 1 bis 11, wobei der Analyt in Form eines kristallinen oder aggregierten Zustands, einer Lösung, Emulsion oder einer Suspension bereitgestellt wird.

13. Ein Verfahren gemäß den Ansprüchen 10 bis 12, wobei die Oberfläche des Trägermediums mindestens einen Kristallisationskem, umfassend einen inerten Kristall, umfasst.

14. Ein Verfahren gemäß den Ansprüchen 1 bis 13, wobei die Zellen ein Volumen aufweisen oder auf ein Gesamtvolumen aufgefüllt werden von höchstens 1000, bevorzugt höchstens 100, stärker bevorzugt höchstens 10 Mikroliter.

15. Ein Verfahren gemäß den Ansprüchen 1 bis 13, wobei die Zellen höchstens 100, bevorzugt höchstens 10, stärker bevorzugt höchstens 1 Mikrogramm des Analyten enthalten.

16. Ein Verfahren gemäß den Ansprüchen 10 bis 15, wobei die Veränderung im Kristallisationsverhalten des Analyten die Bildung von kristallinem Material des Analyten umfasst.

17. Ein Verfahren gemäß Anspruch 16, wobei die Bildung von kristallinem Material des Analyten die Bildung mindestens einer polymorphen Form des kristallinen Materials umfasst.

18. Ein Verfahren gemäß Anspruch 16 oder 17, wobei das kristalline Material des Analyten Co-Kristalle zweier oder mehrerer Analyten oder eines Analyten mit einem kleinen Molekül, wie einem Salz oder Solvat, umfasst.

19. Ein Verfahren gemäß einem der Ansprüche 1 bis 18, welches zusätzlich einen Schritt umfasst, in welchem Nukleierung durch Hinzufügen von Nukleierungszentren, durch Rühren, Vibration, Mikrowellenbehandlung, (Ultra-)Schallbehandlungen, oder einer Kombination davon, veranlasst wird.

20. Ein Verfahren gemäß Anspruch 19, wobei die Nukleierungszentren in Form von kleinen Kristalliten vorliegen.

21. Ein Verfahren gemäß Anspruch 20, wobei die kleinen Kristallite Salze oder Komplexe des Analyten sind.

22. Ein Verfahren gemäß einem der Ansprüche 1 bis 21, wobei der Analyt und/oder Bestandteile durch piezoelektrische Abgabetechniken, Blasenstrahl-Abgabetechniken, Elektrospray-Abgabetechniken, Mikro- und Nano-Abgabetechniken oder durch Flutfüllung, oder Kombinationen davon, zu den Zellen hinzugefügt werden.

## Revendications

1. Procédé pour détecter un polymorphisme d'au moins un analyte, consistant à disposer d'un jeu de compositions sur un milieu de support solide, le milieu de support solide comprenant une multitude de cellules séparées, chaque dite composition comprenant au moins un analyte, et à induire ou permettre à chaque composition d'adopter au moins une première condition influençant éventuellement la cristallisation des compositions dans les cellules sur le milieu de support solide, et à détecter une quelconque cristallisation dans au moins une composition, à déterminer les motifs de diffraction des rayons X dans la géométrie de diffraction de transmission dans les cellules dans lesquelles la cristallisation a été effectuée, à comparer les motifs de diffraction des rayons X et de là à identifier de quelconques polymorphes de l'analyte.

2. Procédé selon la revendication 1, dans lequel le jeu fourni de compositions contient l'au moins un analyte sous une forme polymorphe et dans lequel, par comparaison des motifs de diffraction des rayons X et identification de quelconques autres polymorphes de l'analyte, les conditions de la transformation d'une forme polymorphe d'un analyte en une autre forme polymorphe sont déterminées et/ou optimisées.

3. Procédé selon la revendication 1, dans lequel chaque membre dudit jeu de compositions diffère en ce qui concerne au moins une condition d'avec n'importe quelle autre composition dudit jeu.

4. Procédé selon la revendication 3, dans lequel ladite au moins une condition comprend une condition physique.

5. Procédé selon la revendication 3, dans lequel ladite au moins une condition comprend une condition chimique.

6. Procédé selon la revendication 3, comprenant en outre le changement d'au moins une autre condition après exposition de la composition à ladite première condition.

7. Procédé selon la revendication 3, comprenant en outre l'identification de conditions dans lesquelles une taille et une homogénéité souhaitées des analytes sont obtenues.

8. Procédé selon l'une quelconque des revendications précédentes, dans lequel ledit analyte est une petite molécule organique, un composé organométallique, un catalyseur, un sel d'une molécule organique ou d'un composé ayant une activité pharmaceutique ou une biomolécule.

9. Procédé selon l'une quelconque des revendications précédentes, dans lequel la composition a un volume inférieur à 1000, de préférence inférieur à 100, mieux encore inférieur à 10 microlitres.

10. Procédé selon la revendication 1, dans lequel la composition totale d'une cellule individuelle diffère en ce qui concerne au moins un aspect de la composition d'au moins une autre cellule, et dans lequel des changements du comportement polymorphe des compositions dans les cellules séparées sont détectés par détermination de la forme cristalline de l'analyte.

11. Procédé selon la revendication 10, comprenant de plus une étape dans laquelle la composition de la cellule est encore modifiée.

12. Procédé selon l'une quelconque des revendications 1 à 11, dans lequel l'analyte est fourni sous la forme d'un état cristallin ou agrégé, d'une solution, d'une émulsion ou d'une suspension.

13. Procédé selon les revendications 10 à 12, dans lequel la surface du milieu de support comprend au moins un noyau de cristallisation comprenant un cristal inerte.

14. Procédé selon les revendications 1 à 13, dans lequel les cellules ont un volume ou sont remplies jusqu'à un volume total d'au plus 1000, de préférence d'au plus 100, mieux encore d'au plus 10 microlitres.

15. Procédé selon les revendications 1 à 13, dans lequel les cellules contiennent au plus 100, de préférence au plus 10, mieux encore au plus 1 microgramme de l'analyte.

16. Procédé selon les revendications 10 à 15, dans lequel le changement du comportement de cristallisation de l'analyte comprend la formation de matériau cristallin de l'analyte.

17. Procédé selon la revendication 16, dans lequel la formation de matériau cristallin de l'analyte comprend la formation d'au moins une forme polymorphe du matériau cristallin.

18. Procédé selon la revendication 16 ou 17, dans lequel le matériau cristallin de l'analyte comprend des co-cristaux de deux ou plus de deux analytes ou d'un analyte avec une petite molécule, telle qu'un sel ou un solvate.

19. Procédé selon l'une quelconque des revendications 1 à 18, comprenant de plus une étape dans laquelle une nucléation est induite par addition de centres de nucléation, par agitation, vibration, traitement aux micro-ondes, traitement (ultra)sonique ou une combinaison de ceux-ci.

20. Procédé selon la revendication 19, dans lequel les centres de nucléation sont sous la forme de petites cristallites.

21. Procédé selon la revendication 20, dans lequel les petites cristallites sont des sels ou complexes de l'analyte.

22. Procédé selon l'une quelconque des revendications 1 à 21, dans lequel l'analyte et/ou des composants sont ajoutés aux cellules par des techniques d'introduction par voie piézo-électrique, des techniques d'introduction par jet de bulles, des techniques d'introduction par électrospray, des techniques de micro- et nano-introduction, ou un remplissage par diffusion, ou des combinaisons de ceux-ci.
